Europäisches Patentamt

European Patent Office

Office européen des brevets

(11) Publication number: **0 216 294 B1**

## EUROPEAN PATENT SPECIFICATION

(45) Date of publication of patent specification: **14.08.91**  (51) Int. Cl.⁵: **G11B 7/007**, G11B 7/013

(21) Application number: **86112780.1**

(22) Date of filing: **16.09.86**

(54) Method for writing data in optical recording medium.

(30) Priority: **19.09.85 JP 207558/85**

(43) Date of publication of application:
**01.04.87 Bulletin 87/14**

(45) Publication of the grant of the patent:
**14.08.91 Bulletin 91/33**

(84) Designated Contracting States:
**DE FR GB**

(56) References cited:
**EP-A- 0 189 135**

**PATENT ABSTRACTS OF JAPAN, unexamined applications, P field, vol. 8, no. 113, May 26, 1984 THE PATENT OFFICE JAPANESE GOVERNMENT page 160 P 276**

**R. GORNY "Einführung in die Datenverarbeitung", 1974 SIEMENS AKTIENGESELLSCHAFT, Berlin, München pages 87-90**

(73) Proprietor: **CSK CORPORATION**
**6-1 Nishi-shinjuku 2-chome**
**Shinjuku-ku Tokyo(JP)**

(72) Inventor: **Fumio, Kimura Computer Services Corporation**
**6-1 Nishi-shinjuku 2-chome**
**Shinjuku-ku Tokyo(JP)**

(74) Representative: **Baillie, Iain Cameron et al**
**c/o Ladas & Parry Isartorplatz 5**
**W-8000 München 2(DE)**

## Description

### BACKGROUND OF THE INVENTION

This invention relates to a method for writing data in an optical recording medium, which records digital data in the optical recording medium, by forming patterns of optical changes along tracks defined in the optical recording medium.

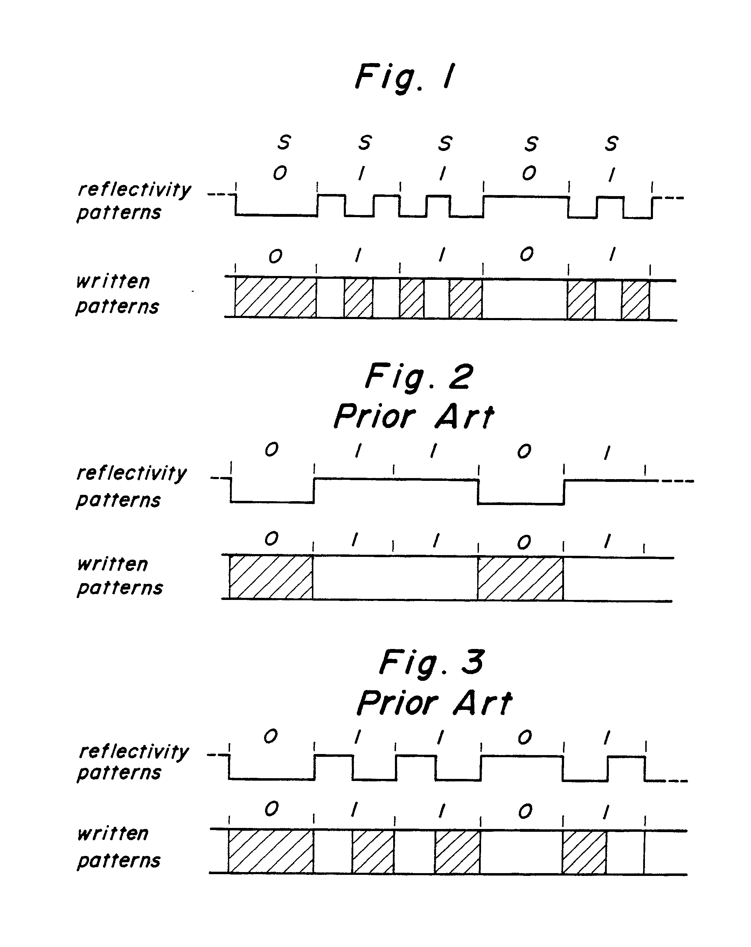

In a conventional method for recording digital data in an optical recording medium, patterns of optical changes, for example, patterns of reflectivity changes of the medium are formed by selecting "high" or "low" variations so as to provide two alternatives of a binary code. For example, a region having a high reflectivity (bright region) is formed to provide a "high" state which correspond to a digital value "1" of one bit. On the other hand, a region having a low reflectivity (dark region) is formed to provide a "low" state corresponding to a digital value "0" of one bit. Fig.2 shows patterns of a optical changes (changes in reflectivity) and patterns written according to the conventional method.

This conventional method, however, involves such a problem that the boundaries between bits representing the same digital values are not distinct as can be seen from Fig.2. To obviate this problem, a method may be proposed according to the FM encoding in which the "high" and "low" states of the written patterns are inverted between any two succeeding bits as shown in Fig.3. Such a method is known from JP-A-5922239 (Patent Abstracts of Japan, Vol.8, No.113, (P.276)[1550]), which discloses the features defined in the first part of appended claim 1.

This conventional FM encoding method, however, again has a problem as described below, because the two digital values "1" and "0" must be discriminated, when read out by an optical sensor such as a CCD, according to the length or duration in which a high-level output from the optical sensor lasts. In other words, the two digital values "1" and "0" are distinguished depending upon whether the high-level output lasts for a predetermined period of time (long high-level) or more or for a period shorter than the predetermined period of time (short high-level).

More particularly, when it is required to increase a recording density and/or increase a speed of data reading, the absolute value of a difference in length or duration between the long high-level and the short high-level will inevitably become small. This makes it more difficult to distinguish the short high-level from the long high-level, leading to possible mis-reading of the data.

### SUMMARY OF THE INVENTION

The present invention has been made to solve the above-mentioned problems, and it is an object of the present invention to provide a method for writing data in an optical recording medium which is capable of ensuring easy distinction between the long high-level and the short high-level, thereby minimizing possible mis-reading of recorded data, even when the recording density is increased and the reading of the data is carried out at a high speed.

In accordance with the present invention as defined in appended claim 1, a method is provided for writing data in an optical recording medium which records digital data by forming patterns of optical changes along tracks defined in the optical recording medium, wherein:

a full recording region corresponding to one bit of the digital data is set to an optically high or low state to represent one of two alternatives of a binary code;

a full recording region corresponding to one bit of the digital data is divided into n sections and each of the divided sections are set so that each two succeeding sections have alternating optically high or low states to represent the other of the two alternatives of the binary code, said n being an integer of three or more; and wherein

the digital data is written by selecting the patterns of optical changes of the binary code so that an may be inversion in optical states at boundaries of the respective bits occurs.

### OPERATION

According to the present invention, one of the two alternatives of the binary code is set in such a way that a high or low state lasts long, while the other of the two alternatives of the binary code is set so that shortened high or low states appear alternatingly. The digital data is written in a manner similar to that of the conventional FM encoding by selecting the optical patterns of the binary code so that the states of the respective bits at the boundaries are inverted with respect to each other. Therefore, in cases where the same digital values continue, the respective bits are distinguishable at their boundaries.

On the other hand, the other of the two alternatives of the binary code is expressed by alternating shortened high and low states of the sections which are formed by dividing the recording region of one bit into n. In this connection, it should be noted that n is selected to be an integer of no less than 3. Therefore, the length or duration of the high (or low) state when the high or low state lasts long and the length or duration of high (or low) state when the shortened high and low states appear alternatingly becomes 3 : 1 or more. As a result of this, an absolute value of a difference between the length of the long high state and that of the shortened high state becomes longer than the length of the shortened high state. Therefore, even if the recording density is increased or the data is read out at a higher speed, the long high state can easily be distinguished from the shortened high state. Thus, possible mis-reading can be minimized. This encourages effective utilization of the FM encoding.

Thus, the present invention can realize data writing which is capable of distinguishing the long high state from the shortened high state and is free from possible mis-reading even when the recording density is increased and the data reading speed is increased.

BRIEF DESCRIPTION OF THE DRAWINGS

Fig.1 is an explanatory view showing patterns of optical changes (changes in reflectivity) and written patterns according to one mode of the present invention;

Fig.2 is a similar explanatory view showing patterns of optical changes (changes in reflectivity) and written patterns according to a conventional writing method;

Fig.3 is also a similar explanatory view showing patterns of optical changes (changes in reflectivity) and written patterns according to a conventional FM encoding method;

Fig.4 is another explanatory view showing patterns of reflectivity changes and written patterns according to another mode of the present invention; and

Fig.5 is a still another explanatory view showing patterns and written patterns according to a further mode of the present invention.

PREFERRED EMBODIMENTS OF THE INVENTION

Preferred embodiments of the present invention will now be described, referring to the accompanying drawings.

(First Embodiment)

Fig.1 illustrates a data writing method for writing data in an optical recording medium according to a first embodiment of the present invention and shows patterns of optical changes (changes in reflectivity) and patterns written in the optical recording medium.

The data writing in the optical recording medium is carried out by forming patterns of optical changes along tracks defined in the optical recording medium. The patterns of optical changes are formed in the form of changes in reflectivity, namely, high or low reflectivity in the present embodiment. In Fig.1, the written patterns are expressed by blank parts and shadowed parts. The shadowed parts represent areas of low reflectivity and the blank parts represent areas of high reflectivity.

In the tracks of the optical recording medium, an entire or full recording region S representing or corresponding to one bit of the digital data may be set to one of two optically alternative states, namely optically high (high reflectivity) or optically low (low reflectivity) to provide one of the binary codes ("0" in the present embodiment). In other words, a digital value "0" is represented by the recording region S corresponding to one bit which is fully or entirely set to an optically high or low state.

An entire or full region S for recording one bit of the digital data may be divided into three sections. Each of the divided sections is set to an optically high or low state so that the each successive two sections alternate in high and low states to represent the other of the binary code ("1" in the present invention). More specifically, a digital value "1" is represented by setting the divided recording region S to a reflectivity pattern of "high - low - high" or "low - high - low".

According to the present invention, the digital data is recorded in such a way that the reflectivity patterns of a binary code are selected so that any adjacent two bits of the digital data may be inverted in optically high and low states in reference to each other. Thus, the digital data may be written in a manner similar to that of the conventional FM encoding (See Fig.1).

With this arrangement, any two adjacent bits change from high to low or vice versa at the respective boundaries and the distinction of the respective bits may be readily made even when the same digital values continue, as can be easily understood by the comparison between the reflectivity change pattern and the written pattern of the present invention as shown in Fig.1 and those of Fig.2.

For the digital value "1", the duration of the high or low state is 1/3 of the recording region S of one bit. Whereas, for the digital value "0", the entire recording region S of one bit is set to a high or low state. Therefore, an absolute value of a difference in lengths or durations between the long high (or low) state and the shortened high (or low) state becomes 2/3 of the recording region S which is longer than the length or duration of the shortened high (or low) state (1/3 of the recording region S). Thus, the long high (or low) state may easily be distinguished from the shortened high (or low) state, which facilitates and ensures distinction between the digital values "0" and "1".

(Second Embodiment)

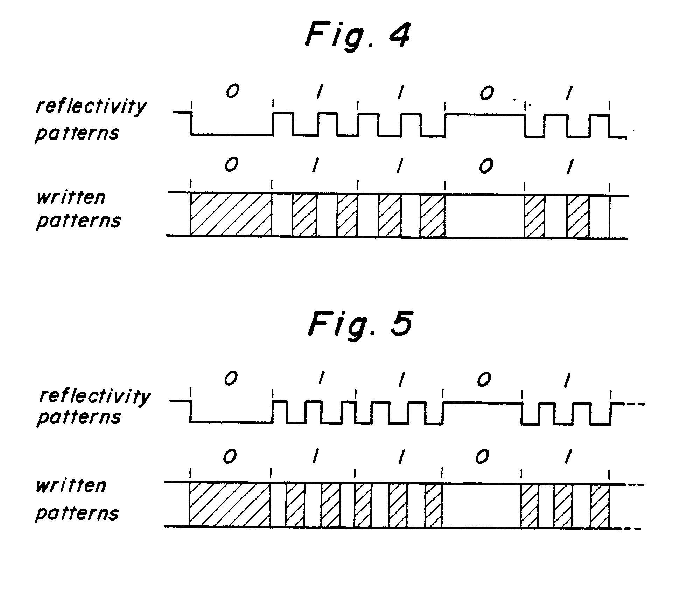

Fig.4 illustrates a data writing method for writing data in an optical recording medium according to a second embodiment of the present invention and shows patterns of optical changes (changes in reflectivity) pattern and patterns written in the optical recording medium.

The present embodiment differs from the first embodiment only in that the recording region S of one bit is divided into four sections. The remaining arrangement is substantially the same as that of the first embodiment.

The entire or full region S for recording one bit of the digital data may be divided into four sections in the present embodiment. Each of the divided sections is set to an optically high or low state so that the each two successive sections alternate in high and low states to represent the said other of the binary code ("1" in the present invention). More specifically, a digital value "1" is represented by setting the divided recording region S to a reflectivity pattern of "high - low - high - low" or "low - high - low - high".

As in the first embodiment, the digital data is recorded in such a way that the reflectivity patterns of a binary code are selected so that any adjacent two bits of the digital data may be inverted in optically high and low states. Thus, the digital data may be written in a similar manner to that of the conventional FM encoding (See Fig.4).

With this arrangement, any two adjacent bits change from high or low or vice versa at the respective boundaries and the distinction of the respective bits may be readily made even when the same digital values continue, as can be easily understood in comparison between the reflectivity change pattern and the written pattern of the present invention as shown in Fig.4 and those of Fig.2, as in the first embodiment.

For the digital value "1", the duration of the high or low state is 1/4 of the recording region S of one bit. Whereas, for the digital value "0", the entire recording region S of one bit is set to a high or low state. Therefore, an absolute value of a difference in lengths or durations between the long high (or low) state and the shortened high (or low) state becomes 3/4 of the recording region S which is longer than the length or duration of the shortened high (or low) state (1/4 of the recording region S). Thus, the long high (or low) state may easily be distinguished from the shortened high (or low) state, which facilitates and ensures distinction between the digital values "0" and "1".

(Third Embodiment)

Fig.5 illustrates a data writing method for writing data in an optical recording medium according to a third embodiment of the present invention and shows patterns of optical changes (changes in reflectivity) pattern and patterns written in the optical recording medium.

The present embodiment differs from the first embodiment only in that the recording region S of one bit is divided into five sections. The remaining arrangement is substantially the same as that of the first embodiment.

The entire or full region S for recording one bit of the digital data may be divided into five sections in the present embodiment. Each of the divided sections is set to an optically high or low state so that the each two successive sections alternate in high and low states to represent the said other of the binary code ("1" in the present invention). More specifically, a digital value "1" is represented by setting the divided recording region S to a reflectivity pattern of "high - low - high - low - high" or "low - high - low - high - low".

As in the first embodiment, the digital data is recorded in such a way that the reflectivity patterns of a binary code are selected so that any adjacent two bits of the digital data may be inverted in optically high and low states. Thus, the digital data may be written in a similar manner to that of the conventional FM encoding (See Fig.5).

With this arrangement, any two adjacent bits change from high to low or vice versa at the respective boundaries and the distinction of the respective bits may be readily made even when the same digital values continue, as can be easily understood in comparison between the reflectivity change pattern and the written pattern of the present invention as shown in Fig.5 and those of Fig.2, as in the first embodiment.

For the digital value "1", the duration of the high or low state is 1/5 of the recording region S of one bit. Whereas, for the digital value "0", the entire recording region S of one bit is set to a high or low state. Therefore, an absolute value of a difference in lengths or durations between the long high (or low) state and the shortened high (or low) state becomes 4/5 of the recording region S which is longer than the length of duration of the shortened high (or low) state (1/5 of the recording region S). Thus, the long high (or low) state may easily be distinguished from the shortened high (or low) state, which facilitates and ensures distinction between the digital values "0" and "1".

(Modifications of Embodiments)

Although the recording region for one bit is divided into three, four or five in the foregoing embodiments, the number of divisions is not limited to these and it may be six or more.

The patterns of the optical changes are provided in the form of reflectivity changes in the foregoing embodiments, but physical changes such as changes in transmissivity or polarization of light may be utilized instead of the changes in reflectivity.

## Claims

1. A method for writing data in an optical recording medium which records digital data by forming patterns of optical changes along tracks defined in the optical recording medium, wherein:

    a full recording region corresponding to one bit of the digital data is set to an optically high or low state to represent one of two binary code alternatives;

    that a full recording region corresponding to one bit of the digital data is divided into sections and each of the divided sections are set so that each two succeeding sections have alternating optically high or low states to represent the other of the two binary code alternatives, ; and wherein

    the digital data is written by selecting the binary code optical change patterns so that an inversion in optical states at boundaries of the respective bits occurs, which method is characterized in that the number n of said sections is an integer of three or more.

2. A method for writing data in an optical recording medium as claimed in claim 1, wherein the patterns of optical changes are provided in the form of patterns of high and/or low reflectivity.

3. A method for writing data in an optical recording medium as claimed in claim 1 or 2, in which n is 3.

4. A method for writing data in an optical recording medium as claimed in claim 1 or 2, in which n is 4.

5. A method for writing data in an optical recording medium as claimed in claim 1 or 2, in which n is 5.

## Revendications

1. Procédé d'écriture de données dans un support d'enregistrement optique qui enregistre des données numériques par formation de figures de changements optiques le long de pistes définies dans le support d'enregistrement optique, dans lequel toute une région d'enregistrement correspondant à un chiffre binaire des données numériques est mise dans un état optiquement haut ou bas pour représenter l'une des deux éventualités d'un code binaire, toute une région d'enregistrement correspondant à un chiffre binaire des données numériques est divisée en plusieurs sections et ces sections sont mises dans des états où elles se succèdent en étant alternativement optiquement haut et bas pour représenter l'autre des deux éventualités du code binaire, et où les données numériques sont écrites en choisissant les figures de changements optiques du code binaire de façon qu'une inversion des états optiques ait lieu aux limites des chiffres binaires respectifs, lequel procédé est caractérisé par le fait que le nombre n desdites sections est un entier au moins égal à 3.

2. Procédé d'écriture de données dans un support d'enregistrement optique selon la revendication 1, dans lequel les figures de changements optiques sont prévues sous la forme de figures de haute et/ou basse réflectivité.

3. Procédé d'écriture de données dans un support d'enregistrement optique selon l'une des revendications 1 et 2, dans lequel n est égal à 3.

4. Procédé d'écriture de données dans un support d'enregistrement optique selon l'une des revendications 1 et 2, dans lequel n est égal à 4.

5. Procédé d'écriture de données dans un support d'enregistrement optique selon l'une des revendications 1 et 2, dans lequel n est égal à 5.

## Patentansprüche

1. Verfahren zum Einschreiben von Daten in ein optisches Speichermedium, in dem zum Speichern von Digitaldaten entlang von in dem optischen Speichermedium definierten Spuren Muster von optischen Veränderungen gebildet werden, wobei zur Darstellung eines von zwei möglichen Bitcodes ein vollständiger Speicherbereich, der einem Bit der Digitaldaten entspricht, in einen optischen Zustand versetzt wird, der einem hohen oder niedrigen Pegel entspricht;

    zum Darstellen des anderen der beiden möglichen Bitcodes ein vollständiger Speicherbereich, der einem Bit der Digitaldaten entspricht, in Abschnitte geteilt wird, von denen jeder in einen solchen Zustand versetzt wird, daß sich jeweils zwei aufeinanderfolgende Abschnitte in optischen Zuständen befinden, die abwechselnd einem hohen bzw. niedrigen Pegel entsprechen; und

zum Einschreiben der Digitaldaten die den Binär-codes entsprechenden Muster von optischen Veränderungen so ausgewählt werden, daß an Grenzen der einzelnen Bits eine Umkehr des optischen Zustandes erfolgt, wobei dieses Verfahren dadurch gekennzeichnet ist, daß die Anzahl n der genannten Abschnitte eine ganze Zahl von drei oder mehr ist.

2. Verfahren zum Einschreiben von Daten in ein optisches Speichermedium nach Anspruch 1, dadurch gekennzeichnet, daß die Muster von optischen Veränderungen in Form von Mustern mit hohem und/oder niedrigem Reflexionsvermögen gebildet werden.

3. Verfahren zum Einschreiben von Daten in ein optisches Speichermedium nach Anspruch 1 oder 2, dadurch gekennzeichnet, daß n gleich 3 ist.

4. Verfahren zum Einschreiben von Daten in ein optisches Speichermedium nach Anspruch 1 oder 2, dadurch gekennzeichnet, daß n gleich 4 ist.

5. Verfahren zum Einschreiben von Daten in ein optisches Speichermedium nach Anspruch 1 oder 2, dadurch gekennzeichnet, daß n gleich 5 ist.

# Fig. 1

reflectivity
patterns

written
patterns

# Fig. 2
# Prior Art

reflectivity
patterns

written
patterns

# Fig. 3
# Prior Art

reflectivity
patterns

written
patterns

## Fig. 4

## Fig. 5